# EUROPEAN PATENT SPECIFICATION

(11) **EP 4 068 943 B1**
(45) Date of publication and mention of the grant of the patent: **17.04.2024**
(21) Application number: 20797049.2
(22) Date of filing: 15.10.2020
(51) Int. Cl.: G05D 1/00, A01D 34/00

(54) **ROBOTIC WORK TOOL, SYSTEM, AND METHOD FOR OPERATION THEREOF**
ROBOTER-ARBEITSWERKZEUG, SYSTEM UND VERFAHREN ZU DESSEN BETRIEB
OUTIL DE TRAVAIL ROBOTIQUE, SYSTÈME ET MÉTHODE DE FONCTIONNEMENT

(30) Priority: 04.12.2019 SE 1951391
(43) Date of publication of application: 12.10.2022
(73) Proprietor: HUSQVARNA AB, 561 82 Huskvarna (SE)
(72) Inventor: GLIMBERG, Tommy, 571 33 NÄSSJÖ (SE); GRUFMAN, Stefan, 564 34 BANKERYD (SE); KALLSTRÖM, Fredrik, 561 91 HUSKVARNA (SE); KAMFORS, Mattias, 554 48 JÖNKÖPING (SE); LILJEDAHL, Marcus, 561 38 HUSKVARNA (SE); MANNEFRED, Björn, 555 92 JÖNKÖPING (SE); HELLSIN, Beppe, 554 73 JÖNKÖPING (SE)
(86) International application number: PCT/EP2020/078977
(87) International publication number: WO 2021/110310

(56) References cited:
- EP-A1- 3 018 548
- EP-A1- 3 533 311
- WO-A1-2016/102145
- CN-A- 105 988 472

## Description

### Field of the invention

The present invention relates to a method for operating a robotic work tool in an area demarcated by a boundary wire.

The invention also relates to a robotic work tool for carrying out the method.

The invention further relates to a robotic work tool system comprising a work tool according to the invention.

### Background

Robotic work tools are used for a number of varying tasks, such as lawn mowing, vacuum cleaning, golf ball collection, snow blowers, etc.

The outer limits of a working area of the robotic tool are usually defined, such as by walls or by an electric cable, which emits a magnetic field. In addition, there may be other means dividing the work area into different zones, such as guide wires, which may also be utilized for directing the robotic work tool back to a charging station.

WO03/104908 discloses one general example of operation of a robotic lawnmower in an area demarcated by a boundary wire.

WO2019039985 discloses another example of a robotic work tool in a demarcated work area, where there is at least one guide wire dividing the work area into different work zones.

CN1 05988472A discloses a robotic lawn mower, which is able to cross over a boundary wire with a certain offset, in order to cut a zone outside of the boundary wire. The offset may be selected by a user, and is constant for all crossings of the boundary wire.

There is a general desire that all of the working area should be treated by the robotic work tool. For example, the edges of a lawn should be meticulously cut, as well as the areas in the middle of the lawn. However, some prior art systems have left the lawn edges unmown. On the other hand, the risk that the robotic work tool encounters problems, gets stuck, etc., is higher in some areas close to the boundaries. The need for a treatment of the boundaries occur in other applications as well, e. g. for the collection of golf balls, etc.

### Summary

It is an object of the present invention to solve, or at least mitigate, parts or all of the above-mentioned problems. To this end, according to a first aspect, there is provided a method for operating a robotic work tool, comprising a sensor for detecting a boundary wire demarcating a work area, the method comprising: detecting at least a partial crossing of the boundary wire; allowing a crossing of the boundary wire by an offset; switching between a first offset setting and at least a second offset setting in the robotic work tool based on one or more occurring events. The method defined above does not imply any specific order between steps; in particular, the event for switching between offset settings may occur at any time, without being near the boundary wire.

This method has the effect of enabling an adjustment of the offset for different parts of the work area e. g. a lawn, which may have different ground conditions and different vegetation conditions. Also, the offset may be adapted to different time periods, such as a smaller offset during vacations, when there is little or no manual monitoring of the robotic tool. Further, an adaptation of the offset to different weather conditions may be obtained. Even further, the offset may be adapted to any other factors which can be determined, and which are considered relevant for the performance of the work tool or for its environment. As one particular example, an offset may compensate for a lack of precision during the installation of the boundary cable, which could be due to negligence or unsuitable ground conditions. Since a lot of different factors are to be taken into account, at any number of parts of the work area, the number of offsets is arbitrary, and may be very large in some advanced embodiments of the method, especially when it is applied in a work area with complex ground conditions. Hence, according to further embodiments, the at least a second offset setting comprises more than one, more than three, or more than ten offset settings. The first and at least one second offset settings may all have different values; alternatively, some or all of them may have been given the same value, depending on the situation. The plurality of offset settings may be simultaneously maintained in a memory of the robotic work tool, and the robotic work tool may be configured to autonomously switch between the plurality of offset settings.

The events may take place during operation of the work tool, i.e. while the robotic work tool performs work within the work area. The events may also take place before the robotic work tool is deployed, or when it is temporarily out of operation.

In some embodiments of the method, the event comprises that the work tool reaches a position or area which is predetermined. By this method the offset may be made dependent on the current position of the robotic work tool. By way of example, different segments of the boundary wire may thereby be associated with different offset settings. The offset allowed in different positions may be predetermined, and may for example be entered by the user. The allowed offset in different positions may also be changed between predetermined values according to a predetermined schedule.

In some embodiments of the method, a current position of the robotic work tool is determined by a GPS or other GNSS (global navigation satellite system) signal. Hereby the position of the robotic work tool may be determined. The GNSS signals may be processed with various methods with varying precision but usually with a high degree of precision.

In further embodiments of the method, a current position of the robotic work tool is determined by dead reckoning from the base station. Hereby another method of determining the current position is given. It may be used as an alternative to other methods or in combination therewith. The current position may be a position along a boundary wire, which may be determined by driving along the boundary wire from a known or predetermined position, such as a charging station, and determining the position along the boundary wire using dead reckoning. This embodiment of the method may also be useful in applications where the outer edges of the work area are to be treated, e. g. for cutting the edges of a lawn.

In further embodiments of the method, a current position is determined based on the detection of a signal from a guide wire. Such a guide wire is often used e. g. for dividing the work area into smaller zones, for directing the work tool through narrow passages of the work area, or for directing it the shortest distance to the base station for charging. Hence such a wire is often present in the work area and may be utilized for this additional purpose without any additional cost or effort.

In even further embodiments of the method, the event comprises that the current time has reached a predetermined point in time. Hereby the offset may be made dependent on the current time. The point in time may be predetermined by the user or based on a predetermined schedule. Different offsets may be employed during different seasons, during periods with a reduced monitoring of the work tool, etc.

In still further embodiments of the method, the event comprises that the current temperature is in a range predetermined by the user or based on a predetermined schedule. Hereby the offset is made temperature dependent. Different temperatures may call for different treatment of the areas close to the boundary wire, and hence different offsets may be useful.

In even further embodiments of the method, the event comprises that the current precipitation is in a predetermined range. By this method the offset is made dependent on precipitation. During rain, there may be a need for a different offset than during dry conditions, in order to ensure a proper functioning of the work tool as well as a suitable treatment of the areas close to the boundary wire. The offset may be predetermined by the user or based on a predetermined schedule. In combination with an event that is based on time, the user may ensure that the boundary area is sufficiently dried up after a rain shower, before switching to a different offset setting is carried out.

According to embodiments, the method may further comprise detecting a difficult terrain; determining a present position; and storing an offset setting for the determined position or for a boundary wire segment associated with the determined present position. Detecting difficult terrain may comprise, e.g., detecting the slip of a wheel against the ground, detecting a collision, or detecting an inclination of the ground exceeding a limit inclination. By changing, and in particular, reducing, the local offset setting for a boundary wire segment at the position of the detected difficult terrain, the risk of getting stuck in the difficult terrain the next time the robotic work tool approaches the problematic area may be reduced.

In further embodiments of the method, the work tool is a robotic lawn mower. A lawn mower is a very common application of robotic work tools, and the advantages of the different embodiments will be particularly appreciated in such applications.

In a second aspect of the present disclosure, there is provided a robotic work tool comprising a controller for controlling the operation of the robotic working tool, the controller further being configured to control the robotic work tool to operate within a work area, which is demarcated by a boundary wire to determine whether the robotic work tool crosses the boundary wire; allow a crossing of the boundary wire by an offset; and switch between at least two offset settings stored in the robotic work tool based on one or more occurring events. This aspect has the effect of providing a work tool which allows an adjustment of the offset for different parts of the lawn, which may have different ground conditions and different vegetation conditions. The robotic work tool according to the second aspect may be configured to operate in accordance with any of the methods defined above with reference to the first aspect. As stated above, the offset may be adapted to different time periods, such as a smaller offset during vacations, when there is little or no manual monitoring of the robotic tool. Further, an adaptation of the offset to different weather conditions may be obtained. Even further, the offset may be adapted to any other factors which can be determined, and which are considered to be relevant for the performance of the work tool or for its environment.

In some embodiments of the second aspect, the robotic work tool is configured to associate boundary wire segments with respective local offset settings. The local offset settings may, for example, be based on user input via an interactive map. Hereby a configuration of the work tool allowing different offset settings is provided.

In further embodiments of the robotic work tool, it is configured to define the work area by guiding the robotic work tool along an intended boundary, and the robotic work tool is configured to, while being guided, detect the position of the boundary wire, and, based on its position relative to the boundary wire, associate a plurality of boundary wire segments with respective local offset settings. The guiding may be performed manually by a user directing the work tool along the boundary of the work area. The work tool may also be preprogrammed to guide itself along the boundary, thereby using dead reckoning to define its position. Hereby, alternative configurations of the work tool are provided as alternatives or possible combinations with other configurations of the work tool.

The edges of the work area may be treated by guiding or running the work tool along the boundary wire. By dead reckoning the work tool will know its position along the boundary wire, and based on the position, the correct offset will be applied.

In a third aspect of the disclosure, a robotic work tool system comprises a work tool as described in other aspects of the disclosure, a boundary wire demarcating a work area, a base station transmitting a control signal through the boundary wire, wherein the system further includes input means for adjusting the offset settings. Such a system has the effect of being easily programmable with different offset settings.

In some embodiments of the third aspect of the disclosure, the robotic work tool is configured to operate according to the method in the first aspect of the disclosure. Hence there is a system which has the effect of enabling an adjustment of the offset for different parts of the lawn, which may have different ground conditions and different vegetation conditions. Also, the offset may be adapted to different time periods, such as a smaller offset during vacations, when there is little or no manual monitoring of the robotic tool. Further, an adaptation of the offset to different weather conditions may be obtained. Even further, the offset may be adapted to any other factors which can be determined, and which are considered relevant for the performance of the work tool or for its environment.

In some embodiments of the third aspect of the disclosure, the robotic work tool system has input means arranged in a mobile phone. Such a system has the advantage of being easily integrated into the user's existing devices.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a diagrammatic view in perspective of a robotic work tool in a work area, demarcated by a boundary cable;
Fig. 2 is a side view of the robotic work tool of Fig. 1 partially crossing the boundary cable;
Fig. 3 is a schematic view as seen from above of one example of a work area, and;
Fig. 4 is flow chart of steps in a method for operating a robotic work tool.

All the figures are schematic, not necessarily to scale, and generally only show parts which are necessary in order to elucidate the embodiments, wherein other parts may be omitted.

### Detailed description of the exemplary embodiments

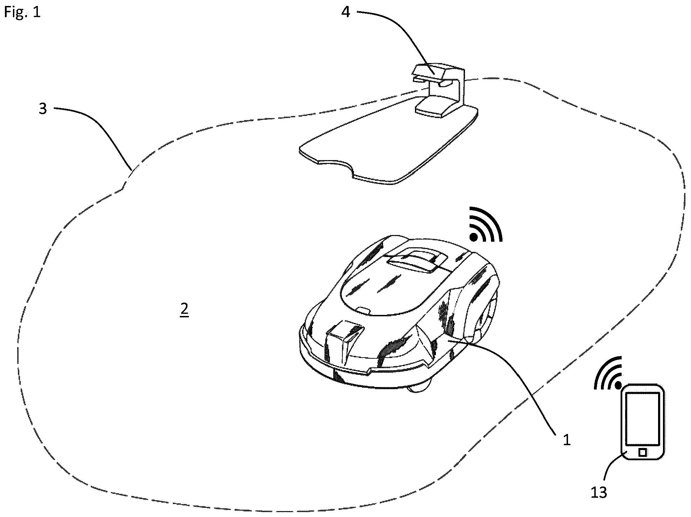

Fig. 1 illustrates a robotic work tool 1 during use in a work area 2. The work area 2 is demarcated by a boundary cable 3, in which there is an electric current, which emits a magnetic field. The magnetic field is registered by sensors in the robotic work tool 1, which is programmed to remain in the work area 2, inside of the boundary cable 3. The boundary cable 3 is also connected to a charging station 4, to which the robotic work tool 1 returns for charging.

The robotic work tool 1 may be any of a number of different types of tools, such as a lawn mower, a snow blower, a golf ball collector etc., which are all designed to work independently in a certain, limited area. The work area 2 may be a lawn, a yard, a driveway, a driving range etc., which are all areas possible to demarcate by a peripheral boundary cable 3. The boundary cable 3 may be buried in the ground but could also be placed and secured on the surface of the ground. Depending on how the robotic work tool 1 is programmed to keep track of its position, the boundary cable 3 may be more or less utilized for guiding the robotic work tool 1 to the charging station 4.

The robotic work tool 1 may operate in the work area 2 along a random path, along a more or less pre-programmed path, along a path that is guided by pre-programmed principles, or any combination thereof.

The robotic work tool 1 is, in the shown embodiment, provided with input means in the form of an external input device 13, by which the operation of the robotic work tool 1, and the settings used therein, is controlled. In many embodiments, the input device 13 is a mobile phone, wherein a dedicated software application (an app) is downloaded. The input device 13 could also be a separate remote control, delivered with the robotic work tool 1. It could also be a computer with dedicated software and an internet connection.

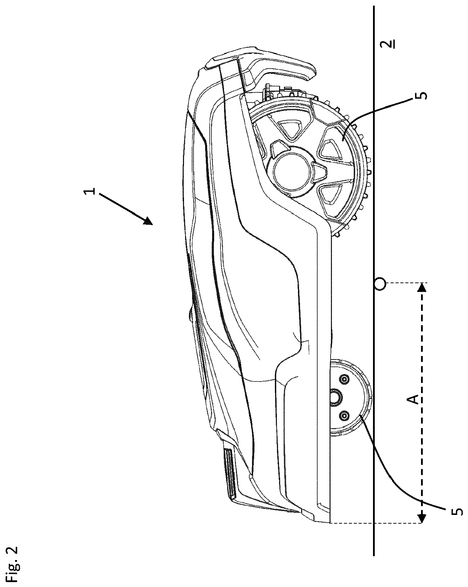

Fig. 2 is a side view of a robotic work tool 1 partially crossing a boundary cable 3. The robotic work tool 1 is provided with two or more wheels 5, and in Fig. 2 at least one of the wheels 5 has crossed the cable 3 and driven into the area surrounding the work area 2. The front end of the robotic work tool 1 extends a distance beyond its forward wheel 5. The maximum distance A that any part of the robotic work tool 1 extends outside of the boundary cable 3 is called an offset.

Although the boundary cable 3 is meant to be the outer limit of the work area, there may be good reasons for allowing an offset. One such reason is that the sensors in the robotic work tool 1 are placed some distance from the outer edges of the work tool 1, and the outer parts of the work tool 1 may extend outside of the boundary cable 3 before the sensors have registered its presence. The needed offset will be at least partly dependent of the geometry of the robotic work tool 1. Another reason for an offset is that the ground conditions may not be suitable for burying a boundary cable 3 exactly at the intended outer limit of the work area 2. Instead the boundary cable 3 will be buried some distance inside the outer limit, but the robotic work tool 1 will be allowed to cross the boundary cable and reach the intended outer limit of the work area 2. Yet another reason for an offset is that there is a desire to ensure that the edges of the work area 2, i. e. the areas immediately inside and above the boundary cable 3, will be as meticulously treated as the rest of the work area 2. If the work tool 1 is allowed to cross the boundary cable with an offset, uniform treatment of the whole work area 2, including its edges, will be possible.

However, the risks associated with offsets, as outlined in the introduction, are dependent on the conditions at each particular site. In some areas a greater offset is acceptable, and even desirable, while the conditions in other areas call for a smaller offset. Examples of when a greater offset is desired is when the ground is hard enough to keep the robotic work tool from getting stuck, as well as when there is no vegetation that could be damaged by the tool. A more limited offset is suitable when the ground outside the work area 2 is soft or steep, or when there is vegetation that should be protected from the robotic work tool 1. Hence there is a need for different offsets at different parts of the boundary cable 3. The suitable offsets may also vary with the weather or other external conditions. Further, if the robotic work tool 1 is monitored regularly, greater offsets may be allowed than when the work tool 1 is unmonitored for longer time periods, since occasional failures, such as stops due to random rocks or downfallen tree branches, will be discovered and fixed quickly if the tool 1 is monitored frequently.

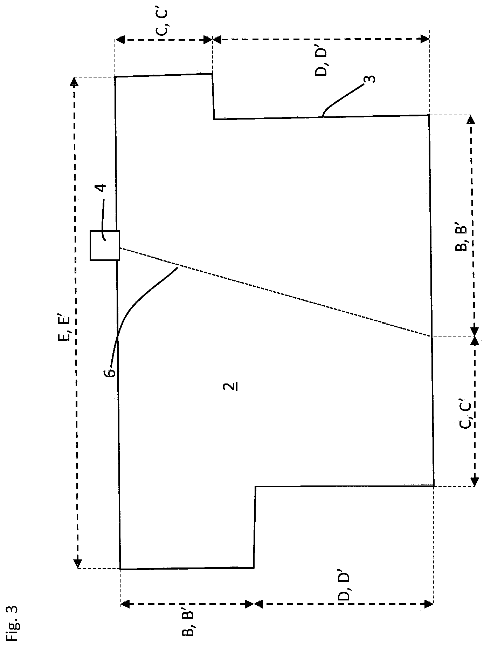

Fig. 3 shows an example of a work area 2 which is demarcated by a boundary cable 3. There is also a guide wire 6, which is used for guiding the robotic work tool 1 a short distance back to the charging station 4, when needed, as well as for dividing the work area 2 into different zones.

Depending on the factors outlined above, different offsets B, C, D, and E are suitable for different parts of the outer limits of the work area 2 under a certain set of predetermined conditions, such as weather conditions (humidity, precipitation, etc.) and the degree of monitoring, etc. For other conditions, there is at least one other set of offsets B', C', D', E'. Hence it is not only possible to arrange that the robotic work tool uses a number of different offsets for different parts of the work area, i. e. the offset is position dependent, but it is also possible to adapt the offsets to other occurring events or circumstances. All the different offset values are stored in the robotic work tool 1.

In the example of Fig. 3, the offset B is fairly limited offset in areas where there is a steep incline. An even smaller offset B' may be suitable during or after rain, since the incline is the same, but it may be more slippery after a rainfall. Offset C is for areas where the ground may be soft depending on weather conditions. A smaller offset C' is suitable during or shortly after rain. The smaller offset is also recommendable during periods with a minimal monitoring. Offset D is a maximum offset for unproblematic areas, where the desire for a thorough treatment of the edges is dominating. A smaller offset D' may be used during a season when there are plants etc. which should not be affected by the robotic work tool 1, in the zones outside of the boundary cable 3. A maximum offset E is useful for areas where there are potential obstacles (i. e. partly soft ground, random objects), which may stop the robotic work tool 1 unintentionally, for time periods with frequent monitoring of the tool 1. When the monitoring is less frequent, a small to medium offset E' will be more suitable. The offset settings may be used in different combinations in order to provide the whole work area 2 with offset settings based on different events, such as the degree of monitoring, precipitation, season etc.

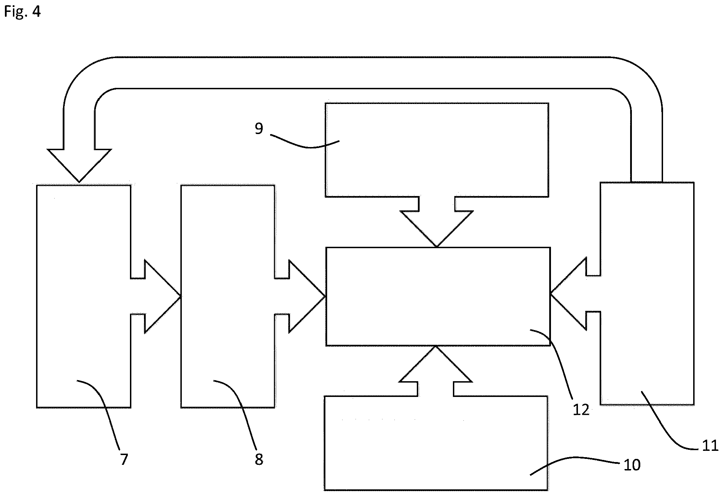

The method for operating the robotic work tool 1 is illustrated in Fig. 4. External events are either automatically sensed, e.g. by rain or light sensors, or created on the user's initiative, e. g. in an interface, such as an app in a mobile phone. The users are able to decide the extent of the offset in different parts of the work area 2. The work area 2 is defined by guiding the robotic work tool 1 along an intended boundary, and the robotic work tool 1 is configured to, while being guided, detect the position of the boundary wire 3. Based on its position relative to the boundary wire 3, the robotic work tool 1 will automatically associate a plurality of boundary wire segments with respective local offset settings stored in the robotic work tool. Alternatively or additionally, an interactive map could also be used for setting different offset values for different boundary wire segments. Such a map could be accessed by the previously mentioned input device 13, such as a remote control or an app in a mobile phone.

As mentioned above, another option is that the user manually guides the robotic work tool 1 along the boundaries of the work area 2, thereby crossing the boundary cable 3 with different offsets at different locations. The offsets will be registered by the work tool 1, and they will be retained as a set of offset settings. For example, in some areas the boundary wire 3 may have been buried some distance away from the outer limit of the intended work area 2, due to ground conditions or due to negligence at the installation of the boundary wire 3. Also, a certain offset may be intentional, e. g. in the case where the boundary wire 3 is buried some distance away from a flowerbed, in order to avoid damage on the wire when the edges of the lawn are maintained by re-digging, or when digging takes place in the flowerbed.

The users are also able to define a number of different offset settings, and the conditions during which each setting is to be applied. Some settings may be made time dependent, precipitation dependent, daylight dependent, etc. Other settings are made to be applied only after a direct order from the user. All such settings may be manipulated with the aid of the external input device 13. When a particular event 7 has occurred, i. e. certain conditions have been fulfilled, switching to a particular set of offset settings takes place in step 8 of Fig. 4.

When the robotic work tool 1 operates in the work area 2, it will sooner or later detect a boundary wire 3, as illustrated in step 9 of Fig. 4. Simultaneously it will have a knowledge of its present position, as indicated in step 10 of Fig. 4. As explained above, different positions may be associated with different offset settings; hence, the reaching of a certain position or area may be an event which triggers a switch between different offset settings. The precision of the present position may vary between different types of robotic work tools 1. Some work tools 1 will have a very high precision in its present position, in particular work tools 1 that determine their position based on RTK (real-time kinematic) enabled GNSS. Other work tools 1 determine their position based on dead reckoning from the base station 4, while still others determine their position from signals from two or more beacons. The guide wire 6, is also useful in determining or confirming the position of the work tool 1.

Also, the robotic work tool 1 will have a knowledge of the present time, including the date, as indicated in step 11. Such knowledge may be derived from an internal clock or from an external source, such as a GPS signal.

With a prevailing set of offset settings and a present position and time, the robotic work tool 1 is able to determine the current offset to be applied in the present position at the present moment, as indicated in step 12 of Fig. 4. As an alternative, the present time is continuously registered as an event in step 7, which may cause a switching to another set of offset settings in step 8, provided that the present time has reached or passed such a point in time that has been pre-programmed as an event that should trigger a switch of offset settings.

Hence the offset applied by the robotic work tool 1 is dependent on its present position and the present time. The offset for different time periods and different places may be set in advance but may also be triggered manually as an event causing a switching of offset settings. All in all, the robotic work tool system, including the robotic work tool 1, the boundary wire 3, the base station 4, and the input means 13 for adjusting the offset settings provide means for performing the operation of the robotic work tool 1 efficiently.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. A method for operating a robotic work tool comprising a sensor for detecting a boundary wire (3) demarcating a work area (2), the method comprising:
detecting (9) at least a partial crossing of the boundary wire (3);
allowing (12) a crossing of the boundary wire (3) by an offset; **characterised in that** the method comprises switching (8) between a first offset setting and at least a second offset setting stored in the robotic work tool (1) based on one or more occurring events (7).

2. The method according to claim 1, wherein the one or more events (7) comprise that the work tool (1) reaches a predetermined position or area.

3. The method according to any of the preceding claims, wherein said first offset setting and said at least a second offset setting are associated with different respective segments of said boundary wire (3).

4. The method according to any of the preceding claims, wherein a current position of the robotic work tool (1) is determined by a GNSS signal.

5. The method according to any of claims 1 to 4, wherein a current position of the robotic work tool (1) is determined by dead reckoning from a base station (4).

6. The method according to any of claims 1 to 5, wherein a current position is determined based on the detection of a signal from a guide wire (6).

7. The method according to any of claims 1 to 6, wherein the one or more events (7) comprise that the current time has reached a predetermined point in time.

8. The method according to any of claims 1 to 7, wherein the one or more events (7) comprise that the current temperature is in a predetermined range.

9. The method according to any of claims 1 to 8, wherein the one or more events (7) comprise that the current precipitation is in a predetermined range.

10. The method according to any of the preceding claims, further comprising
detecting a difficult terrain;
determining a present position; and
storing an offset setting for the determined position or for a boundary wire segment associated with the determined present position.

11. The method according to any of the preceding claims, wherein the robotic work tool (1) is a robotic lawn mower.

12. A robotic work tool (1) comprising a controller for controlling the operation of the robotic working tool (1), the controller further being configured to:
control the robotic work tool (1) to operate within a work area (2), which is demarcated by a boundary wire (3);
determine whether the robotic work tool (1) crosses the boundary wire (3);
allow a crossing of the boundary wire (3) by an offset; **characterised in that** the controller is configured to
switch between at least two offset settings stored in the robotic work tool (1) based on one or more occurring events (7).

13. A robotic work tool (1) according to claim 12, configured to associate boundary wire segments with respective local offset settings based on user input via an interactive map.

14. A robotic work tool (1) according to claim 12 or 13, configured to define the work area (2) by guiding the robotic work tool (1) along an intended boundary, wherein the robotic work tool (1) is configured to, while being guided, detect the position of the boundary wire (3), and, based on its position relative to the boundary wire (3), associate a plurality of boundary wire segments with respective local offset settings.

15. A robotic work tool according to any of the claims 12-14, wherein the work tool is configured to operate according to the method according to any of claims 1 to 11.

16. A robotic work tool system comprising a work tool (1) according to any of claims 12 to 15, a boundary wire (3) demarcating a work area (2), a base station (4) transmitting a control signal through the boundary wire (3), wherein the system further includes input means (13) for adjusting the offset settings.

17. A robotic work tool system according to claim 16, wherein the input means (13) is arranged in a mobile phone.

## Patentansprüche

1. Verfahren zum Betreiben eines Roboter-Arbeitswerkzeugs, umfassend einen Sensor zum Erfassen eines Begrenzungskabels (3), das einen Arbeitsbereich (2) abgrenzt, wobei das Verfahren umfasst:
Erfassen (9) zumindest einer teilweisen Überquerung des Begrenzungskabels (3);
Ermöglichen (12) einer Überquerung des Begrenzungskabels (3) um einen Versatz;
**dadurch gekennzeichnet, dass** das Verfahren das Umschalten (8) zwischen einer ersten Versatzeinstellung und mindestens einer zweiten Versatzeinstellung, die im Roboter-Arbeitswerkzeug (1) gespeichert ist, auf der Grundlage eines oder mehrerer auftretender Ereignisse (7) umfasst.

2. Verfahren nach Anspruch 1, wobei das eine oder die mehreren Ereignisse (7) umfassen, dass das Arbeitswerkzeug (1) eine vorbestimmte Position oder einen vorbestimmten Bereich erreicht.

3. Verfahren nach einem der vorhergehenden Ansprüche, wobei die erste Versatzeinstellung und die mindestens eine zweite Versatzeinstellung jeweils unterschiedlichen Segmenten des Begrenzungskabels (3) zugeordnet sind.

4. Verfahren nach einem der vorhergehenden Ansprüche, wobei eine aktuelle Position des Roboter-Arbeitswerkzeugs (1) durch ein GNSS-Signal bestimmt wird.

5. Verfahren nach einem der Ansprüche 1 bis 4, wobei eine aktuelle Position des Roboter-Arbeitswerkzeugs (1) durch Koppelrechnung von einer Basisstation (4) aus bestimmt wird.

6. Verfahren nach einem der Ansprüche 1 bis 5, wobei eine aktuelle Position auf der Grundlage der Erfassung eines Signals von einem Führungskabel (6) bestimmt wird.

7. Verfahren nach einem der Ansprüche 1 bis 6, wobei das eine oder die mehreren Ereignisse (7) umfassen, dass die aktuelle Zeit einen vorbestimmten Zeitpunkt erreicht hat.

8. Verfahren nach einem der Ansprüche 1 bis 7, wobei das eine oder die mehreren Ereignisse (7) umfassen, dass die aktuelle Temperatur in einem vorbestimmten Bereich liegt.

9. Verfahren nach einem der Ansprüche 1 bis 8, wobei das eine oder die mehreren Ereignisse (7) umfassen, dass der aktuelle Niederschlag in einem vorbestimmten Bereich liegt.

10. Verfahren nach einem der vorhergehenden Ansprüche, ferner umfassend:
Erfassen eines schwierigen Geländes;
Bestimmen einer aktuellen Position; und
Speichern einer Versatzeinstellung für die bestimmte Position oder für ein der bestimmten aktuellen Position zugeordnetes Begrenzungskabelsegment.

11. Verfahren nach einem der vorhergehenden Ansprüche, wobei das Roboter-Arbeitswerkzeug (1) ein Roboter-Rasenmäher ist.

12. Roboter-Arbeitswerkzeug (1), umfassend eine Steuerung zum Steuern des Betriebs des Roboter-Arbeitswerkzeugs (1), wobei die Steuerung ferner für folgende Vorgänge ausgelegt ist:
Steuern des Roboter-Arbeitswerkzeugs (1) zum Betrieb innerhalb eines Arbeitsbereichs (2), der durch ein Begrenzungskabel (3) abgegrenzt ist;
Bestimmen, ob das Roboter-Arbeitswerkzeug (1) das Begrenzungskabel (3) überquert;
Ermöglichen einer Überquerung des Begrenzungskabels (3) um einen Versatz;
**dadurch gekennzeichnet, dass** die Steuerung dafür ausgelegt ist, auf der Grundlage eines oder mehrerer auftretender Ereignisse (7) zwischen mindestens zwei im Roboter-Arbeitswerkzeug (1) gespeicherten Versatzeinstellungen umzuschalten.

13. Roboter-Arbeitswerkzeug (1) nach Anspruch 12, das dafür ausgelegt ist, Begrenzungskabelsegmente auf der Grundlage von Benutzereingaben über eine interaktive Karte jeweiligen lokalen Versatzeinstellungen zuzuordnen.

14. Roboter-Arbeitswerkzeug (1) nach Anspruch 12 oder 13, das dafür ausgelegt ist, den Arbeitsbereich (2) durch Führen des Roboter-Arbeitswerkzeugs (1) entlang einer beabsichtigten Grenze zu definieren, wobei das Roboter-Arbeitswerkzeug (1) dafür ausgelegt ist, während des Geführtwerdens die Position des Begrenzungskabels (3) zu erfassen und auf der Grundlage seiner Position relativ zum Begrenzungskabel (3) eine Vielzahl von Begrenzungskabelsegmenten jeweiligen lokalen Versatzeinstellungen zuzuordnen.

15. Roboter-Arbeitswerkzeug nach einem der Ansprüche 12 bis 14, wobei das Arbeitswerkzeug zum Betrieb gemäß dem Verfahren nach einem der Ansprüche 1 bis 11 ausgelegt ist.

16. Roboter-Arbeitswerkzeugsystem, umfassend ein Arbeitswerkzeug (1) nach einem der Ansprüche 12 bis 15, ein Begrenzungskabel (3), das einen Arbeitsbereich (2) abgrenzt, eine Basisstation (4), die ein Steuersignal durch das Begrenzungskabel (3) überträgt, wobei das System ferner Eingabemittel (13) zum Einstellen der Versatzeinstellungen beinhaltet.

17. Roboter-Arbeitswerkzeugsystem nach Anspruch 16, wobei die Eingabemittel (13) in einem Mobiltelefon eingerichtet sind.

## Revendications

1. Procédé pour le fonctionnement d'un outil robotique de travail comprenant un capteur pour détecter un fil de limite (3) démarquant une zone de travail (2), le procédé comprenant :
la détection (9) d'au moins un franchissement partiel du fil de limite (3) ;
la permission (12) d'un franchissement du fil de limite (3) selon un écart ; **caractérisé en ce que** le procédé comprend
la commutation (8) entre un premier réglage d'écart et au moins un second réglage d'écart stocké dans l'outil robotique de travail (1) sur la base d'un ou de plusieurs événements en cours (7).

2. Procédé selon la revendication 1, dans lequel l'un ou les plusieurs événements (7) comprennent le fait que l'outil de travail (1) atteint une position ou zone prédéterminée.

3. Procédé selon l'une quelconque des revendications précédentes, dans lequel ledit premier réglage d'écart et ledit au moins un second réglage d'écart sont associés à différents segments respectifs dudit fil de limite (3).

4. Procédé selon l'une quelconque des revendications précédentes, dans lequel une position actuelle de l'outil robotique de travail (1) est déterminée par un signal GNSS.

5. Procédé selon l'une quelconque des revendications 1 à 4, dans lequel une position actuelle de l'outil robotique de travail (1) est déterminée par estime, depuis une station de base (4).

6. Procédé selon l'une quelconque des revendications 1 à 5, dans lequel une position actuelle est déterminée sur la base de la détection d'un signal provenant d'un fil de guidage (6).

7. Procédé selon l'une quelconque des revendications 1 à 6, dans lequel l'un ou les plusieurs événements (7) comprennent le fait que l'heure actuelle a atteint un moment prédéterminé.

8. Procédé selon l'une quelconque des revendications 1 à 7, dans lequel l'un ou les plusieurs événements (7) comprennent le fait que la température actuelle est dans une plage prédéterminée.

9. Procédé selon l'une quelconque des revendications 1 à 8, dans lequel l'un ou les plusieurs événements (7) comprennent le fait que la précipitation actuelle est dans une plage prédéterminée.

10. Procédé selon l'une quelconque des revendications précédentes, comprenant en outre
la détection d'un terrain difficile ;
la détermination d'une présente position ; et
le stockage d'un réglage d'écart pour la position déterminée ou pour un segment de fil de limite associé à la présente position déterminée.

11. Procédé selon l'une quelconque des revendications précédentes, dans lequel l'outil robotique de travail (1) est une tondeuse robotique à gazon.

12. Outil robotique de travail (1) comprenant une unité de commande pour commander le fonctionnement de l'outil robotique de travail (1), l'unité de commande étant en outre configurée pour :
commander l'outil robotique de travail (1) pour fonctionner à l'intérieur d'une zone de travail (2), qui est démarquée par un fil de limite (3) ;
déterminer si l'outil robotique de travail (1) franchit le fil de limite (3) ;
permettre un franchissement du fil de limite (3) selon un écart ; **caractérisé en ce que** l'unité de commande est configurée pour
commuter entre au moins deux réglages d'écart stockés dans l'outil robotique de travail (1) sur la base d'un ou de plusieurs événements en cours (7).

13. Outil robotique de travail (1) selon la revendication 12, configuré pour associer des segments de fil de limite à des réglages d'écart locaux respectifs, sur la base d'entrée utilisateur par l'intermédiaire d'une carte interactive.

14. Outil robotique de travail (1) selon la revendication 12 ou 13, configuré pour définir la zone de travail (2) en guidant l'outil robotique de travail (1) le long d'une limite voulue, dans lequel l'outil robotique de travail (1) est configuré pour, alors qu'il est guidé, détecter la position du fil de limite (3), et, sur la base de sa position relativement au fil de limite (3), associer une pluralité de segments de fil de limite à des réglages d'écart locaux respectifs.

15. Outil robotique de travail selon l'une quelconque des revendications 12 à 14, dans lequel l'outil de travail est configuré pour fonctionner selon le procédé selon l'une quelconque des revendications 1 à 11.

16. Système d'outil robotique de travail, comprenant un outil de travail (1) selon l'une quelconque des revendications 12 à 15, un fil de limite (3) démarquant une zone de travail (2), une station de base (4) transmettant un signal de commande par le biais du fil de limite (3), dans lequel le système inclut en outre un moyen d'entrée (13) pour ajuster les réglages d'écart.

17. Outil robotique de travail système selon la revendication 16, dans lequel le moyen d'entrée (13) est agencé dans un téléphone mobile.
